Europäisches Patentamt

European Patent Office

Office européen des brevets

(11) Publication number: **0 178 901 B1**

# EUROPEAN PATENT SPECIFICATION

(45) Date of publication of patent specification: **17.04.91** (51) Int. Cl.⁵: **B29C  45/56**

(21) Application number: **85307410.2**

(22) Date of filing: **15.10.85**

(54) Methods of forming articles by injection moulding.

(30) Priority: **18.10.84 JP 218824/84**

(43) Date of publication of application:
**23.04.86 Bulletin  86/17**

(45) Publication of the grant of the patent:
**17.04.91 Bulletin  91/16**

(84) Designated Contracting States:
**CH DE FR GB LI NL**

(56) References cited:
**GB-A- 1 577 522**
**GB-A- 2 050 928**
**US-A- 3 196 485**
**US-A- 3 983 196**

(73) Proprietor: **SONY CORPORATION**
**7-35 Kitashinagawa 6-Chome Shinagawa-ku**
**Tokyo 141(JP)**

(72) Inventor: **Segawa, Takashi c/o Patents Division**
**Sony Corporation 6-7-35 Kitashinagawa**
**Shinagawa-ku Tokyo 141(JP)**
Inventor: **Tsuboi, Kunio c/o Patents Division**
**Sony Corporation 6-7-35 Kitashinagawa**
**Shinagawa-ku Tokyo 141(JP)**

(74) Representative: **Thomas, Christopher Hugo et**
**al**
**D Young & Co 10 Staple Inn**
**London WC1V 7RD(GB)**

EP 0 178 901 B1

## Description

This invention relates to methods of forming articles by injection moulding according the preamble of claim. Methods in accordance with the invention may be used, for example, for forming discs such as video discs, digital read and write (DRAW) discs or erasable discs.

In a known method of forming video discs by injection moulding, disclosed in US patent specification US-A-4 185 955, a molten plastics material is injected into a cavity formed between discs which are mutually pressed together (a movable die being pressed against a stationary die with a pressure of several hundred tonnes) to form a video disc in which signal patterns (pits) are copied using a stamper.

In forming optical discs such as a video disc by injection moulding, it is important that the signal patterns in the stamper are well copied, in particular, that the signal patterns over the whole area of the stamper from its centre to its periphery are uniformly copied; and that birefringence of the disc, which means in this case, the phase shift between an incident light beam and a reflected light beam when reading signal patterns in a disc, and which are mainly caused by internal strains in the disc, is made as small as possible. When the birefringence is large, the signal patterns in the disc cannot be read by a detector. Particularly, in DRAW discs for both signal writing and signal read-out, it is very serious if written signals cannot be read later.

Unlike a compact video disc (with a diameter of 12 cm), a large video disc (with a diameter of 20 to 30 cm) is usually formed by injection moulding using acrylic resin having good mouldability, which means that the molten plastics material has a good flowability in a cavity formed between dies, so is easy to mould, but there are a few problems as follows:

(1) Since acrylic resin is very hygroscopic, an aluminium film cannot be strongly adhered thereto, so it tends to peel off after a time.

(2) Since acrylic resin is of low heat resistance, it is not possible to heat two discs to a high temperature to stick them together to form a double-sided disc; so the adhesion strength between the two discs is low.

(3) Since acrylic resin has a low impact resistance, it is easily damaged if dropped or struck.

The small-sized compact video disc is usually formed by injection moulding using polycarbonate resin, as it is less hygroscopic, has a higher heat resistance, and has a higher impact resistance as compared with acrylic resin. Therefore, if a large video disc is formed using polycarbonate resin, the above problems (1) to (3) can be overcome.

We have experimented with forming a large-sized video disc using polycarbonate resin by the injection moulding method disclosed in US-A-4 185 955.

However, the disc obtained as the result of this experiment not only had a poor copy of signal patterns of the stamper in its peripheral portion, but also such a large birefringence that only that portion at or near the radius of 12.5 cm of the disc satisfied a practical birefringence range of ±35°, so most of the signals could not be read.

We believe that the polycarbonate resin has such a low mouldability and high photoelastic modulus as compared with acrylic resin, that the flowability of the molten plastics material in the cavity varies substantially in the radius direction of the disc. That is, in the case of forming small-sized discs such as a compact disc, the molten plastics material has comparatively good flowability in the cavity, and there is little pressure difference between the central portion and the peripheral portion of the disc. On the contrary, in the case of large-sized discs such as a video disc, the molten plastics material has a very low flowability in the cavity and undesirable stresses are generated in the molten plastics material in the cavity. As a result, the polymer content and the residual stresses are not uniformly distributed over the whole extent from the central portion to the peripheral portion of the disc in the cavity, so that substantial internal strains are generated.

UK patent specification GB-A-1 577 522 discloses a method and apparatus for moulding plastics lenses, in particular opthalmic lenses. In the method disclosed, plastics material is injected into a cavity and the force of the molten plastics material against a die causes the volume of the cavity to increase. Thereafter, the die is moved to decrease the size of the cavity, so compressing the molten plastics material within the cavity prior to and during solidification.

US patent specification US-A-3 196 485 discloses apparatus for press moulding a plastics article such as a gramophone record, and comprising movable, stationary and auxiliary dies and a matrix generally in accordance with the pre-characterizing part of claim 1.

According to the present invention there is provided a method for forming articles by injection moulding in which a melted plastics material is injected into a cavity defined in a mould, said mould including a movable die, a stationary die, and a stamper for imparting a desired pattern to said article, said stationary die having an auxiliary die in contact with and capable of moving along an outer periphery of said stationary die, said method being characterized by the steps of:

closing said movable die onto said stationary die under the condition of substantially no pressure, such that a first portion of said auxiliary die is in contact with said movable die and a gap exists between said movable die and a second portion of said auxiliary die;

injecting said melted plastics material into said cavity, and thereby slightly releasing away said movable die from said stationary die by the pressure of the injected melted plastics material while moving said auxiliary die along said outer periphery to maintain said first portion of said auxiliary die in contact with said stationary die when said melted plastics material is injected; and

pressing said movable die towards said stationary die during injection or after injection to press mould said melted plastics material in said cavity while exhausting gas from said cavity through said gap.

The invention will now be described by way of example with reference to the accompanying drawings, throughout which like parts are referred to by like references, and in which:

Figure 1 is a sectional view of dies for injection moulding which are used in a method according to the present invention, and particularly shows a state wherein a movable die is spaced from a stationary die;

Figure 2 is a sectional view showing a state wherein the movable die is moved from the state shown in Figure 1 and brought near the stationary die, the dies being pressed against each other;

Figure 3 is a sectional view showing a state wherein a molten plastics material is injected into a cavity formed by the dies;

Figure 4 is a sectional view showing a state wherein the movable die is urged against the stationary die with a predetermined pressure during or after injection;

Figure 5 is a sectional view of a movable die drive unit including a hydraulic system for controlling operation of the movable die shown in Figures 1 to 4, the movable die being spaced from the stationary die;

Figure 6 is a sectional view of the movable die drive unit wherein the movable die is pressed against the stationary die;

Figure 7 is a sectional view of the movable die drive unit in a state wherein the movable die has been slightly pushed back due to the pressure during injection;

Figure 8 is a sectional view of the movable die drive unit for urging the movable die against the stationary die during or after injection; and

Figure 9 is a diagram showing the difference in birefringence between a disc formed by the method of the present invention and one formed by the prior method.

The method according to the present invention which is to be described is applied to an apparatus for forming optical discs by injection moulding.

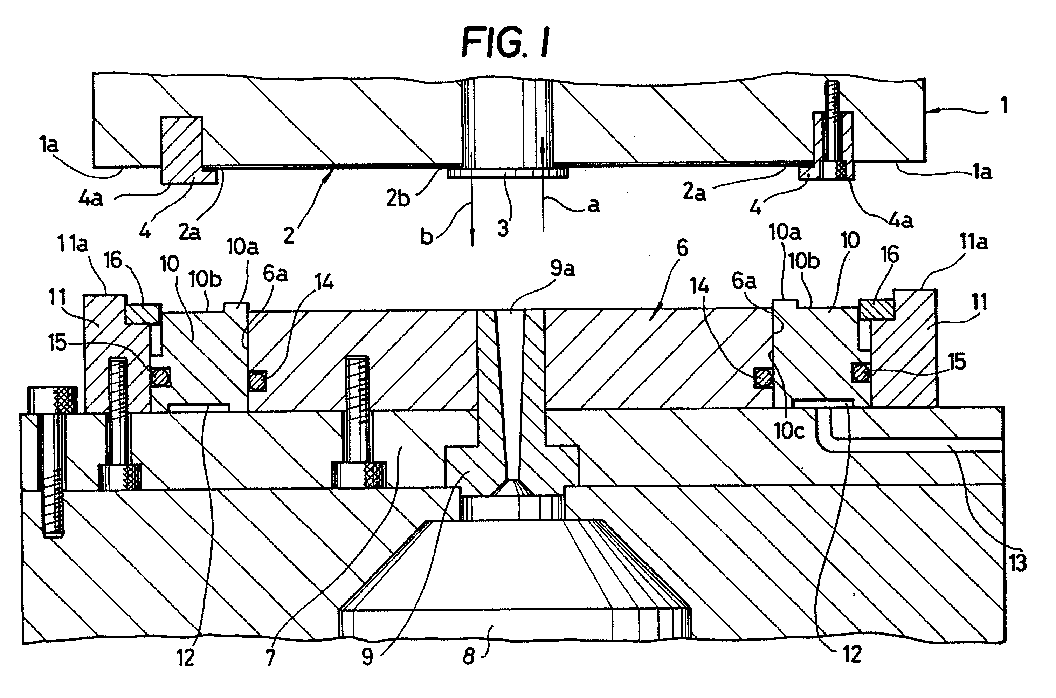

As shown in Figure 1, a stamper 2 is fixed to a movable die 1, using a centre holder 3 and a peripheral holder 4. A stationary die 6 is fixed to a base 7. A sprue bushing 9 is provided in the central portion of the stationary die 6. The bushing 9 is coupled to an injection nozzle 8, and has an opening 9a at its distal end. An annular auxiliary die 10 is movably provided on the outer periphery of the stationary die 6, and on the outer periphery of the auxiliary die 10, there is provided an annular member 11 which is fixed to the base 7. An annular projection 10a integral with the auxiliary die 10 can be fitted into the inner periphery of the peripheral holder 4. An annular air cylinder 12 is provided at the rear side of the auxiliary die 10, and in front of the base 7. An air supply path 13 formed in the base 7 is connected with the air cylinder 12. 0-rings 14 and 15 for preventing air leakage are placed between the stationary die 6 and the auxiliary die 10, and between the auxiliary die 10 and the annular member 11, respectively. A stop 16 for preventing removal of the auxiliary die 10 is provided at a distal end 11a of the annular member 11.

The moulding of a disc with this apparatus and using polycarbonate resin will now be described.

Figure 1 shows a state wherein the movable die 1 has been moved in the direction of an arrow a and is spaced from the stationary die 6.

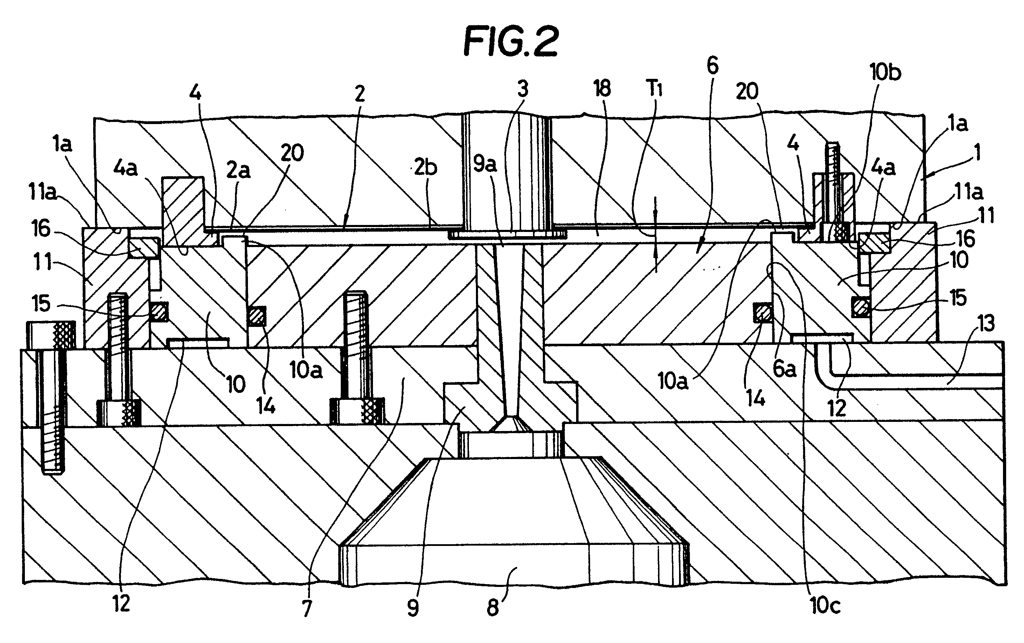

When the movable die 1 in the state shown in Figure 1 is moved in the direction of an arrow b in Figure 1, the peripheral portion 1a of the movable die 1 abuts against the distal end 11a of the annular member 11 secured to the stationary die 6 as shown in Figure 2, so that the dies 1 and 6 are closed. Then, the annular projection 10a of the auxiliary die 10 fits the inner periphery of the peripheral holder 4, and a cavity 18 limited by the inner periphery of the auxiliary die 10 is formed between the dies 1 and 6.

In the closed state, the pressure with which the movable die 1 is pressed against the stationary die 6 is about 0 kg/cm$^2$.

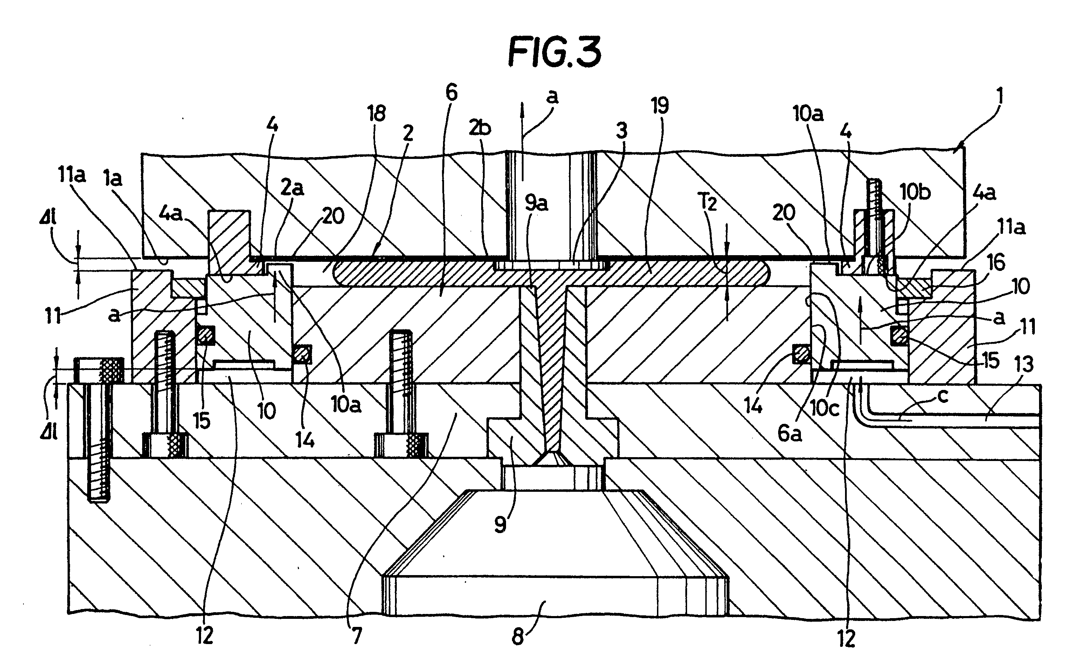

As shown in Figure 3, a molten plastics material, in particular polycarbonate resin 19, is injected into the cavity 18 through the sprue bushing 9 from the injection nozzle 8, and when the molten polycarbonate resin 19 is injected, the movable die 1 is pushed back by $\Delta l$ in the direction of an arrow a in Figure 3, because the pressure is about 0 kg/cm$^2$ when the molten polycarbonate resin 19 is injected. Thus, the gap between the dies 1 and 6 increases from T1 in Figure 2 to T2 in Figure 3. As a result, the pressure in the cavity 18 becomes close to atmospheric pressure, so that the molten polycarbonate resin 19 is injected into the cavity 18 with substantially no pressure applied to it. Thus, the flowability of the molten polycarbonate resin 19 is very good in the cavity 18, and undesirable stresses are not generated in the molten polycarbonate resin 19.

In the meantime, almost simultaneously with injection of the molten polycarbonate resin 19, pressurized air is supplied through the air supply path 13 into the air cylinder 12 in the direction of an arrow c as shown in Figure 3, so that the auxiliary die 10 is moved in the direction of the arrow a by the pressurized air. That is, the auxiliary die 10 is moved forward by $\Delta l$ in the direction of the arrow a as the movable die 1 is pushed back by $\Delta l$ in the direction of the arrow a. At this time, the distal end of the auxiliary die 10 abuts at its lower portion 10b against a distal end 4a of the peripheral holder 4, so a slight gap 20, necessary for exhausting the air, is provided between the annular projection 10a and a peripheral portion 2a of the stamper 2. Accordingly, if the auxiliary die 10 is moved in the direction of the arrow a, the annular projection 10a is not pressed against the peripheral portion 2a of the stamper 2, and the air in the cavity 18 is always exhausted through the gap 20.

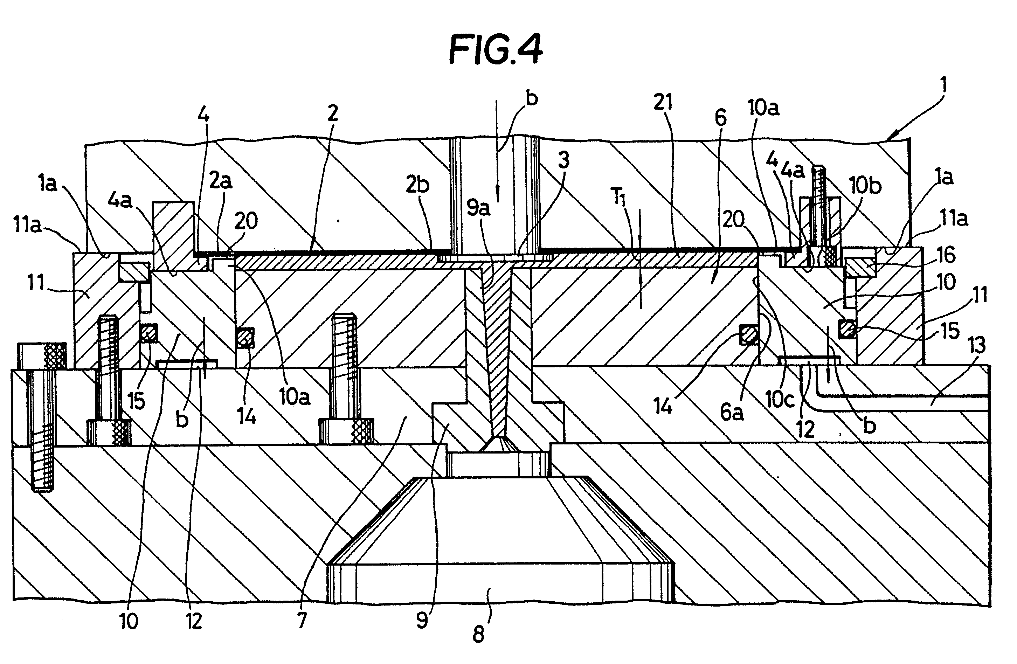

The movable die 1 is pressed in the direction of an arrow b by a high pressure (several hundred tonnes) during or after injection of the molten polycarbonate resin 19 into the cavity 18 as illustrated in Figure 4. At this time, the movable die 1 is moved forward in the direction of the arrow b by $\Delta l$ and simultaneously with the movement of the movable die 1, the auxiliary die 10 is withdrawn by $\Delta l$ in the direction of the arrow b against the air pressure in the air cylinder 12, because the distal end 4a of the peripheral holder 4 urges the lower portion 10b of the auxiliary die 10. However, the slight gap 20 necessary for exhausting the air still remains between the annular projection 10a of the auxiliary die 10 and the skirt portion 2a of the stamper 2.

Thus, from the molten polycarbonate resin 19, a disc 21 having a desired thickness is press-moulded, and signal patterns (pits) in the stamper 2 are copied in the disc 21. In this case, the air in the cavity 18 is exhausted through the very small gap 20, so the molten polycarbonate resin 19 pressurized in the cavity 18 is dammed by the inner surface of the auxiliary die 10, and does not undesirably flow out through the gap 20.

After press moulding, the injection pressure of the molten polycarbonate resin 19 is kept unchanged and the dies 1 and 6 are cooled.

With the dies formed as described above, and operated in the above manner, the air is always sufficiently exhausted from the cavity 18 through the slight gap 20 and further, the peripheral portion 2a of the stamper 2 is not undesirably pressed by the annular projection 10a of the auxiliary die 10, so that wrinkles are not formed in the peripheral portion 2a of the stamper 2. Moreover, the molten polycarbonate resin 19 does not undesirably permeate and set between the peripheral holder 4 and the peripheral portion 2a of the stamper 2, so wrinkles are not formed in the peripheral portion 2a of the stamper 2 at the time when the dies 1 and 6 are subsequently opened.

In addition, undesirable stresses are not generated in the molten plastics material 19 when it is injected into the cavity 18. Furthermore, as the molten plastics material 19 in the cavity 18 is uniformly pressurized by the movable die 1 (which is very important, so that no wrinkles are formed in the peripheral portion 2a of the stamper 2 when the movable die 1 is pressed against the stationary die 6), the copy of the signal pattern is much improved, not only in the centre portion 2b of the stamper 2, but also in the peripheral portion 2a. In addition, the polymer content and residual stress in the disc 21 becomes substantially uniform over the whole area of the disc 21, that is, from the centre portion to the peripheral portion of the disc 21, and substantially no internal strain occurs in the disc 21, so that the birefringence of the disc 21 is very low, as will be described below.

The auxiliary die 10 is slidably mounted on the stationary die 6 and moved in the directions of the arrows a and b in Figures 3 and 4, and the heat of the stationary die 6 is constantly conducted to the auxiliary die 10, so that substantially no difference in temperature occurs between the auxiliary die 10 and the stationary die 6. Thus, no seam caused by a difference in the coefficient of thermal expansion between the auxiliary die 10 and the stationary die 6 is generated. Therefore, no gap is formed at a sliding portion between an inner surface 10c of the auxiliary die 10 and an outer surface 6a of the stationary die 6. Usually, if a gap resulting from seams is formed at the sliding portion, the molten plastics material 19 injected into and pressurized in the cavity 18 flows easily into the gap, thereby forming a burr. However, with the described dies 1, 6 and 10 no burr occurs.

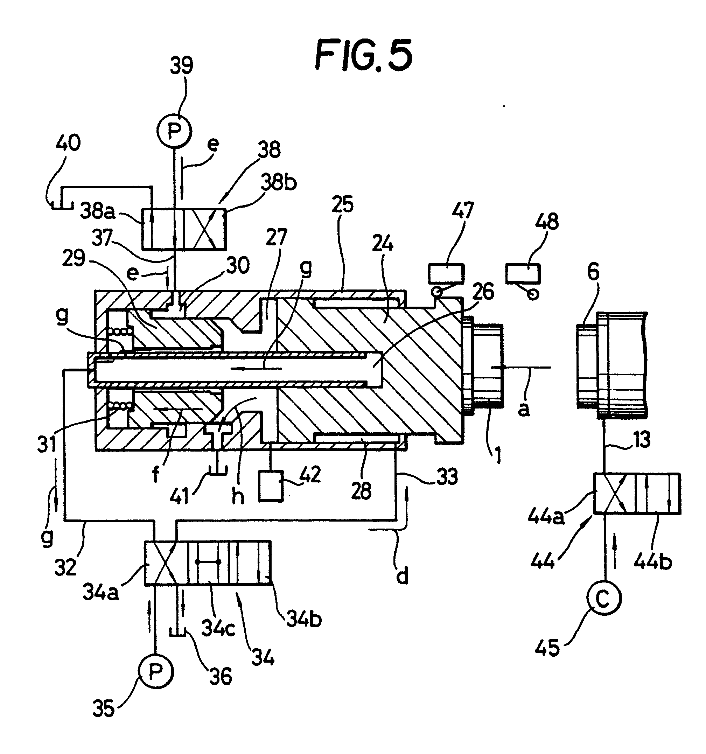

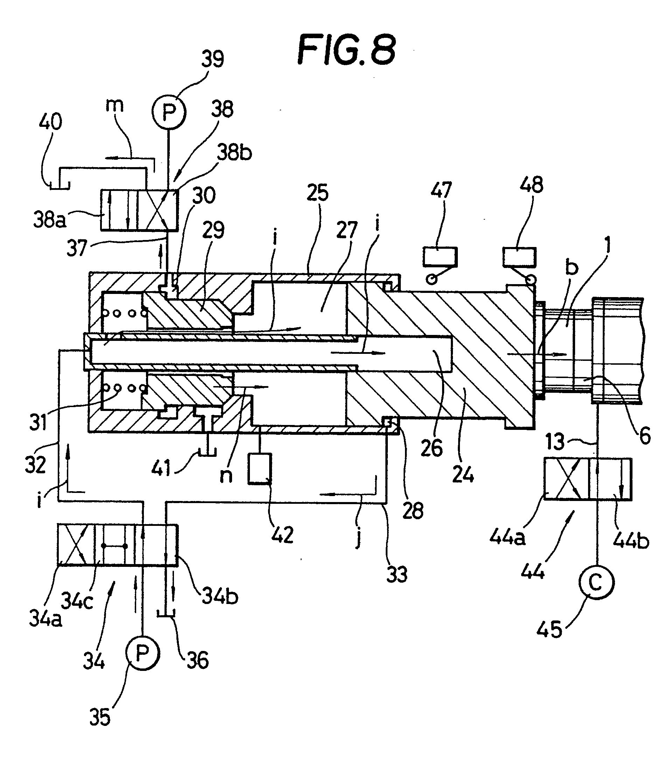

A direct pressure type hydraulic drive circuit for driving the dies 1, 6 and 10 will now be described with reference to Figures 5 and 8.

A ram 24 for moving the movable die 1 forwards and backwards is supported by a ram cylinder 25. First and second hydraulic cylinders 26 and 27 for moving the ram 24 forward, and a third hydraulic cylinder 28 for moving the ram 24 backward are provided in the ram cylinder 25. A prefill valve 29 for operating the second hydraulic cylinder 27 is provided in the ram cylinder 25. The prefill valve 29 is operated by a fourth hydraulic cylinder 30 and a spring 31. A hydraulic pressure supply path 32 for the first and second hydraulic cylinders 26 and 27, and a hydraulic pressure supply path 33 for the third hydraulic cylinder 28 are connected to a hydraulic pump 35 and an oil tank 36 through a first selector 34 serving as a three-position selector. A hydraulic pressure supply path 37 for the fourth hydraulic cylinder 30 is connected to a hydraulic pump 39 and an oil tank 40 through a second selector 38 serving as a two-position selector. An oil tank 41 and an oil gauge 42 are connected to the second hydraulic cylinder 27. The air supply path 13 for the air cylinder 12 is connected to an air compresser 45 through a third selector 44 serving as a two-position selector. The first, second and third selectors 34, 38 and 44 are, for example, electromagnetic valves.

The operation of the drive circuit will now be described.

Figure 5 shows an open state of the drive circuit. First, the first selector 34 is switched to the first position 34a at an end thereof, hydraulic pressure is supplied from the hydraulic pump 35 in the direction of an arrow d into the third hydraulic cylinder 28 through the hydraulic pressure supply path 33, and the ram 34 is moved backward in the direction of an arrow a. Consequently, the movable die 1 is released from the stationary die 6 in the direction of the arrow a to be in the open state as shown in Figure 1. In this case, the second selector 38 is switched to a first position 38a so that the hydraulic pressure from the hydraulic pump 39 is supplied in the direction of an arrow e into the fourth hydraulic cylinder 30 through the hydraulic pressure supply path 37, and the prefill valve 29 is moved backward in the direction of an arrow f against the spring 31. Consequently, upon the backward movement of the ram 24 in the direction of the arrow a, oil in the first and second hydraulic cylinders 26 and 27 is returned into the oil tank 36 in the direction of an arrow g, and simultaneously a large quantity of oil in the second hydraulic cylinder 27 is returned into the oil tank 41 in the direction of an arrow h. When the ram 24 reaches a rear limit position in the direction of the arrow a, it is detected by a rear position detection switch 47 comprising a limit switch. The first selector 34 is switched to an intermediate third position 34c, oil supply into the third hydraulic cylinder 28 is stopped, and the ram 24 is stopped at the rear limit position, thereby completing die opening.

Then, the operation is performed from the die open state as described above, and the disc 21 is moulded.

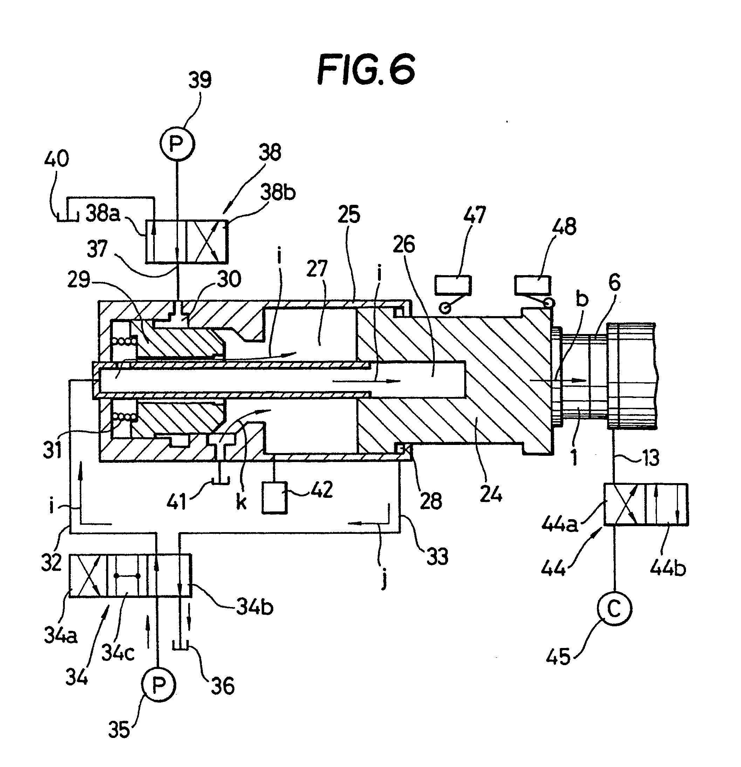

First, as shown in Figure 6, when the first selector 34 is switched to a second position 34b at the other end thereof, hydraulic pressure from the hydraulic pump 35 is supplied in the direction of an arrow i into the first and second hydraulic cylinders 26 and 27 through the hydraulic pressure supply path 32, and the ram 24 is moved forward in the direction of an arrow b. Consequently, the movable die 1 abuts against the auxiliary die 11 of the stationary die 6 in the direction of the arrow b as shown in Figure 2 to be at the closed state, and the cavity 18 is defined. In this case, upon the forward movement of the ram 24 in the direction f of the arrow b, oil in the third hydraulic cylinder 28 is returned into the oil tank 36 in the direction of an arrow j, and simultaneously a large quantity of oil in the oil tank 41 is automatically drawn by vacuum suction into the second hydraulic cylinder 27 in the direction of an arrow k.

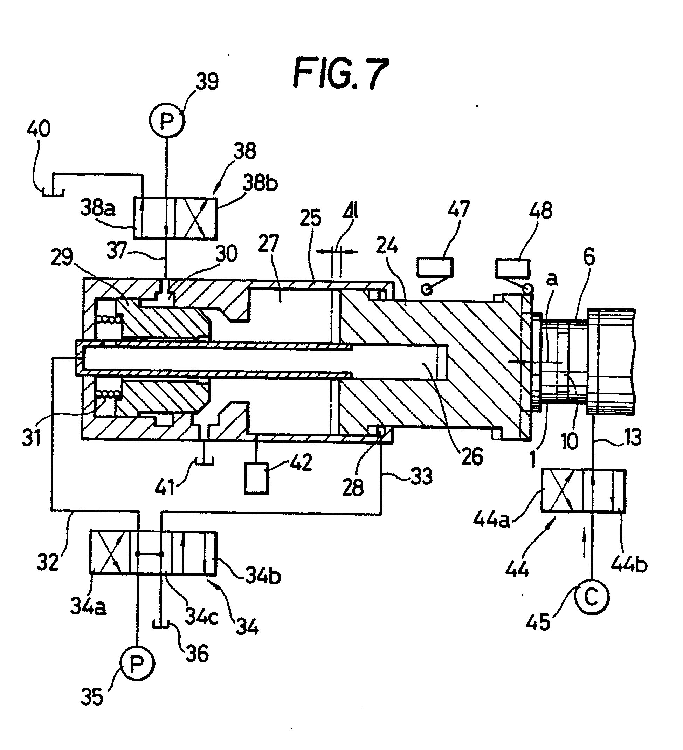

When the ram 24 reaches a front limit position in the direction of the arrow b, it is detected by a front position detection switch 48 comprising a limit switch, the first selector 34 is again switched to the third position 34c as shown in Figure 7, oil supply to the first and second hydraulic cylinders 26 and 27 is stopped, and the ram 24 is stopped at the front limit position, thereby completing die closing.

In this die closed state, the pressure described with reference to Figure 2 and applied to the movable die 1 is detected by the oil gauge 42 for detecting hydraulic pressure in the second hydraulic cylinder 27. In the die closed state, the pressure is about 0 kg/cm$^2$.

Then, after the die closing, injection into the cavity 18 as described with reference to Figure 3 is started. Injection moulding is started under control of a die close completion detection signal from the front position detection switch 48 and a pressure detection signal from the oil gauge 42.

After injection of the molten plastics material 19 into the cavity 18 described with reference to Figure 3 has been started, the ram 24 is moved backward in the direction of an arrow a by $\Delta l$ by the injection pressure as indicated by a broken line in Figure 7.

In the meantime, the third selector 44 is switched to a second position 44b as shown in Figure 7 almost simultaneously with the injection step as described with reference to Figure 3. Pressurized air is supplied from the air compressor 45 into the air cylinder 12 through the air supply path 13.

Then, during or after the injection step described with reference to Figure 4, the first selector 34 is switched to the second position 34b again as shown in Figure 8, and simultaneously, the second selector 38 is switched to the second position 38b. Switching is performed by a time set signal from a timer which has been set by a position detection signal of an injection screw in the injection nozzle 8 or an injection start signal.

First, when the second selector 38 is switched to the second position 38b, oil in the fourth hydraulic cylinder 30 is returned into the oil tank 40 in the direction of an arrow m through the oil supply path 37, and the prefill valve 29 is moved forward by the spring 31 in the direction of an arrow n. Consequently, reverse oil flow from the second hydraulic cylinder 27 to the oil tank 41 is prevented.

Then, when the first selector 34 is switched to the second position 34b simultaneously with switching of the second selector 38, a large quantity of oil is supplied from the hydraulic pump 35 into the first and second hydraulic cylinders 26 and 27 through the hydraulic pressure supply path 32 in the direction of an arrow i. In this case, reverse oil flow from the second hydraulic cylinder 27 to the oil tank 41 is prevented by the prefill valve 29 as described above, so that the pressure, especially in the second hydraulic cylinder 27, is increased, and the ram 24 is pressurized to a predetermined high pressure (several hundreds of tonnes) in the direction of an arrow b, thereby providing the pressed state. In this case, oil in the third hydraulic cylinder 28 is returned into the oil tank 36 through the oil supply path 33.

The pressed state is maintained until moulding of the disc 21 described with reference to Figure 4 has been completed (until the completion of the cooling step for the dies 1 and 6). After disc moulding, the third selector 44 is switched to the first position 44a.

The drive circuit having the configuration and operating in the manner as described above can perform various control operations as follows.

In a 200-tonne class apparatus for injection moulding an optical disc, the prefill valve 29 is slowly moved forward by the spring 31 in the direction of the arrow n in Figure 8. Therefore, the second selector 38 can be switched to the second position 38a simultaneously with the injection start of the molten plastics material 19 into the cavity 18, and the prefill valve 29 can be moved forward at an early stage of the operation in the direction of the arrow n. Alternatively, the ram 24 can be moved backward in the direction of the arrow a as described with reference to Figure 7 by an injecting pressure of the molten plastics material 19 into the cavity 18.

The prefill valve 29 can be closed (moved forward to the position shown in Figure 8) at the beginning of injection of the molten plastics material 19 into the cavity 18, and the first selector 34 can be switched from the third position 34c to the second position 34b during the injection step. This is the reason why the pressure at the beginning of the injection is low.

At the beginning of injection of the molten plastics material 19 into the cavity 18, the pressed state shown in Figure 2 need not be complete. In this case, injection can be started in the die open state wherein the dies 1 and 6 are separated by $T_2$ as shown in Figure 3, and thereafter pressing as described with reference to Figure 8 can be performed. For this purpose, only the front position detection switch 48 for detecting the movement of the ram 24 in the direction of the arrow b as described with reference to Figure 6 must be set at a position for opening the dies.

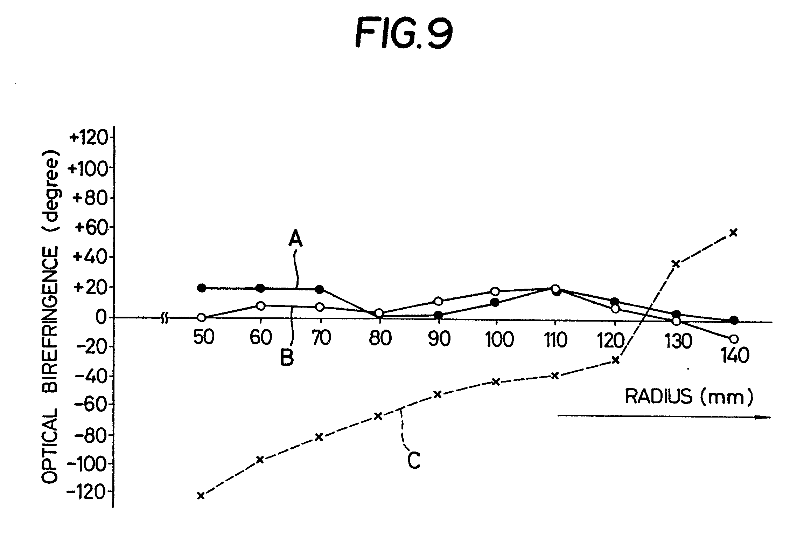

As has been described above, the apparatus moulds the optical disc 21 from polycarbonate resin. Figure 9 shows measured birefringence values A and B of the disc 21 moulded by a method according to the present invention (the values A and B being measured along two directions on the disc 21). The birefringence values over an entire area of the disc 21 from the innermost portion to the outermost portion thereof fall within an acceptable practical range of $\pm 35°$. Reference symbol C represents a birefringence value of a disc moulded using a prior manufacturing method. As is apparent from this, the manufacturing method according to the present invention is excellent as compared with the prior method.

Various modifications are of course possible. For example, the drive circuit can use pressurized air. Similarly, the drive mechanism of the auxiliary die 10 need not comprise the air cylinder 12 but can comprise a hydraulic cylinder or a spring. The pressure operating mechanism need not comprise the prefill valve 29 but can comprise any other suitable structure.

The method is not limited to injection moulding of optical discs such as video discs or DRAW discs, but can be used for injection moulding various other articles.

## Claims

1. A method for forming articles by injection moulding in which a melted plastics material (19) is injected into a cavity (18) defined in a mould, said mould including a movable die (1), a stationary die (6), and a stamper (2) for imparting a desired pattern to said article, said stationary die (6) having an auxiliary die (10) in contact with and capable of moving along an outer periphery (6a) of said stationary die (6), said method being characterized by the steps of:

    closing said movable die (1) onto said stationary die (6) under the condition of substantially no pressure, such that a first portion of said auxiliary die (10) is in contact with said movable die (1) and a gap (20) exists between said movable die (1) and a second portion of said auxiliary die (10);

injecting said melted plastics material (19) into said cavity (18), and thereby slightly releasing away said movable die (1) from said stationary die (6) by the pressure of the injected melted plastics material (19) while moving said auxiliary die (10) along said outer periphery (6a) to maintain said first portion of said auxiliary die (10) in contact with said stationary die (6) when said melted plastics material (19) is injected; and

pressing said movable die (1) towards said stationary die (6) during injection or after injection to press mould said melted plastics material (19) in said cavity (18) while exhausting gas from said cavity (18) through said gap (20).

2. A method according to claim 1 wherein said melted plastics material (19) is polycarbonate resin.


**Revendications**

1. Procédé pour mouler des articles par moulage par injection, dans lequel une matière plastique fondue (19) est injectée dans une empreinte (18) définie dans un moule, ledit moule comprenant un outil mobile (1), un outil fixe (6) et une matrice (2) servant à donner une gravure désirée audit article, ledit outil fixe (6) possédant un outil auxiliaire (10) en contact avec la péri-phérie extérieure (6a ) dudit outil fixe (6) et capable de se déplacer le long de cette périphérie extérieure, ledit procédé étant caractérisé par les phases consistant à :
   - fermer ledit outil mobile (1) sur ledit outil fixe (6) dans des conditions de pression sensiblement nulle, de manière qu'une première partie dudit outil auxiliaire (10) soit en contact avec ledit outil mobile (1), et qu'il subsiste une fente (20) entre ledit outil mobile (1) et une deuxième partie dudit outil auxiliaire (10);
   - injecter ladite matière plastique fondue (19) dans ladite empreinte (18) et, dans cette action, écarter légèrement ledit outil mobile (1) dudit outil fixe (6) par la pression de la matière plastique fondue injectée (19) tout en déplaçant ledit outil auxiliaire (10) le long de ladite périphérie extérieure (6a ) pour maintenir ladite première partie dudit outil auxiliaire (10) en contact avec ledit outil fixe (6) pendant que ladite matière plastique fondue est injectée ; et

   - presser ledit outil mobile (1) vers ledit outil fixe (6) pendant l'injection ou après l'injection pour mouler ladite matière plastique fondue (19) par pression dans ladite empreinte (18), tout en laissant les gaz s'échapper de ladite empreinte (18) à travers ladite fente (20).

2. Procédé selon la revendication 1, dans lequel ladite matière plastique fondue (19) est une résine polycarbonate.


**Ansprüche**

1. Verfahren zum Formen von Gegenständen durch Spritzgießen, gemäß welchem ein geschmolzenes Kunststoffmaterial (19) in einen in einer Form definierten Hohlraum (18) eingespritzt wird, wobei die Form ein bewegliches Werkzeug (1), ein unbewegliches Werkzeug (6) und ein Prägeteil (2) zum Übertragen eines gewünschten Musters auf den Gegenstand aufweist und das unbewegliche Werkzeug (6) ein Hilfswerkzeug (10) umfaßt das in Kontakt steht mit und zur Bewegung entlang eines Außenumfangs (6a) des unbeweglichen Werkzeugs (6) geeignet ist,
**gekennzeichnet** durch die Schritte:

   Schließbewegen des beweglichen Werkzeugs (1) bis an das unbewegliche Werkzeug (6) unter im wesentlichen druckloser Bedingung derart, daß ein erster Teil des Hilfswerkzeugs (10) in Kontakt mit dem beweglichen Werkzeug (1) steht und sich ein Spalt (20) zwischen dem beweglichen Werkzeug (1) und einem zweiten Teil des Hilfswerkzeugs (10) befindet,
   Einspritzen des geschmolzenen Kunststoffmaterials (19) in den Hohlraum (18), wodurch das bewegliche Werkzeug (1) durch den Druck des eingespritzten geschmolzenen Kunststoffmaterials (19) etwas vom unbeweglichen Werkzeug (6) entfernt und gleichzeitig das Hilfswerkzeug (10) entlang dem Außenumfang (6a) bewegt wird, um den ersten Teil des Hilfswerkzeugs (10) in Kontakt mit dem unbeweglichen Werkzeug (6) zu halten, wenn das geschmolzene Kunststoffmaterial (19) eingespritzt wird, und
   Pressen des beweglichen Werkzeugs (1) in Richtung des unbeweglichen Werkzeugs (6) während des Einspritzens oder nach dem Einspritzen zwecks Preßformung des geschmolzenen Kunststoffmaterials (19) im Hohlraum (18), während Gas vom Hohlraum (18) durch den Spalt (20) abgeführt wird.

2. Verfahren nach Anspruch 1, wobei das geschmolzene Kunststoffmaterial (19) Polykarbonatharz ist.

# FIG. I

EP 0 178 901 B1

# FIG.2

EP 0 178 901 B1

# FIG.3

# FIG.4

EP 0 178 901 B1

# FIG.5

# FIG.6

# FIG.7

# FIG.8

FIG.9